# EUROPEAN PATENT APPLICATION

(11) **EP 4 224 495 A1**
(43) Date of publication of application: **09.08.2023**
(21) Application number: 23151157.7
(22) Date of filing: 11.01.2023
(51) Int. Cl.: H01F 27/29, H02M 3/158

(54) **DUAL-PHASE COUPLED INDUCTOR WITH DIAGONALLY OVERLAPPED WINDINGS AND GAP CONTROLLED INVERSE COUPLING**

(30) Priority: 04.02.2022 US 202263306814 P; 31.10.2022 US 202218051261
(71) Applicant: Analog Devices, Inc., Wilmington, MA 01887 (US)
(72) Inventor: MIAO, Zichen, Sunnyvale, 94085 (US); ZHANG, Jindong, San Jose, 95135 (US); HUANG, Zhengrong, San Jose, 95134 (US)
(74) Representative: Horler, Philip John

(57) **Abstract**

A low-profile dual-phase inverse coupled inductor structure can include diagonally overlapped windings and gap controlled inverse coupling, such as can be useful to help achieve strong negative coupling and high saturation current for POL applications. The device may include a coupled inductor structure comprising a first magnetic core piece, and a conductive first winding portion on at least a portion of the first magnetic core piece. An electrical insulator may be included on at least a portion of the first winding portion and a conductive second winding portion may be located such as to cover the insulator. At least a portion of the second winding portion overlaps, and may be separated by the insulator from, at least an underlying portion of the first winding portion. A second magnetic core piece may be located on the second winding portion.

## Description

### TECHNICAL FIELD

The present disclosure relates to inductor structures, specifically to coupled inductor structures having overlapped windings and a variable gap structure to control an inverse coupling coefficient of the coupled inductor structure.

### BACKGROUND

As electronic devices become smaller, there is less room for the circuit components on the circuit boards contained in the devices. Power converters such as multi-phase buck converters are used in a wide variety of electronic devices such as battery chargers, power audio amplifiers, and the like. Switched mode power converters can use inductors to provide stable current to the load as a pulse-width modulation (PWM) or other control signal operates a bridge or other configuration of switches coupled to the inductor. Inductors can be coupled or non-coupled. Coupled inductors have two or more windings on the same core, which takes advantage of magnetic coupling to influence the behavior of each winding on the other. Non-coupled or uncoupled discrete inductors use two or more cores with a single winding on each core. Coupled inductors can be used for increasing or decreasing voltage or current, for transferring impedance through a circuit, or for electrically isolating two circuits from each other, while taking up less space on the circuit board.

### SUMMARY

The techniques described herein relate to a low-profile dual-phase inverse coupled inductor structure (hereinafter "coupled inductor structure", "inverse coupled inductor structure", or "the structure", which may be used simultaneously throughout) that can include diagonally overlapped windings and gap controlled inverse coupling, such as can be useful to help achieve strong negative coupling and high saturation current for POL applications. An example can include a device including a coupled inductor structure. The device can include a first magnetic core piece. A conductive first winding portion can be located on at least a portion of the first magnetic core piece. An electrical insulator can be located on at least a portion of the first winding portion. A conductive second winding portion can cover the insulator. At least a portion of the second winding portion can overlap, and can be separated by the insulator from, at least an underlying portion of the first winding portion. A second magnetic core piece can be located on the second winding portion. In an example, the electrical insulator can be an independent insulator or, alternatively, can be a coating on the conductive winding portions.

The coupled inductor structure may be rectangular shaped, having two sides and two ends. The two sides (a first side and a second side opposite the first side) can form a length of the rectangular structure and can be substantially parallel to each other. The two ends (a first end and a second end opposite the first end) can form a width of the rectangular structure and can be substantially parallel to each other. In such an example, the two sides may be equal in length and have a length that is greater than the width of the two ends, which may also be equal to each other.

The coupled inductor structure may include a first switch node terminal and a second switch node terminal located on the first side of the coupled inductor structure. The coupled inductor structure may also include a first output voltage terminal and a second output voltage terminal located on the second side of the coupled inductor structure. The switch node terminals may be located substantially across (e.g., on an opposite side of the inductor structure) from the voltage output terminals. For example, the first switch node terminal may be located substantially across the coupled inductor structure from one of the first or the second output voltage terminal, and the second switch node terminal may be located substantially across the coupled inductor structure from the other of the first or the second output voltage terminal. Thus, the coupled inductor structure can have all input nodes on one side of the magnetic core and the output nodes on the other side of the magnetic core. In an example, portions of the windings can offer or provide low or reduced Direct Current (DC) resistance. For example, the short length of the first winding and/or the short length of the second winding may offer low DC resistance when compared to the longer portions or lengths of the windings.

The coupled inductor structure may include a first gap and a second gap formed between the first magnetic core piece and the second magnetic core piece. The first gap and the second gap may be substantially parallel to each other and may span a width of the coupled inductor structure between the first side and the second side. For example, the first gap may span the width of the coupled inductor structure between the first switch node terminal and one of the first output voltage terminal or the second output voltage terminal. Similarly, the second gap may span the width of the coupled inductor structure between the second switch node terminal and the other of the first output voltage terminal or the second output voltage terminal. An inverse coupling between the first winding portion and the second winding portion of the coupled inductor structure may be present with a strength based on a thickness of at least one of the first gap or the second gap.

The coupled inductor structure may further include a third gap and a fourth gap formed between the first magnetic core piece and the second magnetic core piece. The third gap may be located on one of the first side or the second side, and the fourth gap may be located on the other of the first side or the second side. Thus, the third gap and the fourth gap may also be substantially parallel to each other. In an example, a level of saturation current of the coupled inductor structure may be based on a thickness of at least one of the third gap or the fourth gap. Any of the gaps may be filled with air or various types of materials such as glues, epoxy, paper, or plastics with permeability close to or similar to that of air.

In an example, the coupled inductor structure may be included in a Trans-Inductor Voltage Regulator (TLVR) circuit. The TLVR circuit may include a first magnetic core piece, a first winding portion located on at least a portion of the first magnetic core piece, an insulator on at least a portion of the first winding portion, and a second winding portion located at least in part on the insulator and overlapping at least an underlying portion of the first winding portion. The first winding portion and the second winding portion may form a winding structure having a first end and a second end opposite the first end. A third winding portion may be located proximate the first end of the winding structure and a fourth winding portion may be located proximate the second end of the winding structure. A second magnetic core piece may be located above the winding structure, the third winding portion, and the fourth winding portion.

A terminal of the third winding portion may be connected to a terminal of the fourth winding portion to couple the third winding portion and the fourth winding portion to the winding structure. The first winding portion and the second winding portion may be primary side winding portions, and the third winding portion and the fourth winding portion may be secondary side winding portions. At least one of the third winding portion or the fourth winding portion may have a one-to-one turns ratio with the first winding portion or the second winding portion.

The inverse-coupled inductor structure may utilize a substantially or a completely flat top surface area, which may aid working with pick-and-place machines and may enhance mechanical robustness. In addition, locating the switch node terminals (e.g., SW₁ and SW₂ ) on one side of the inductor structure and the output voltage terminals (e.g., V_{OUT1} and V_{OUT2} ) on the other side of the structure, may simplify the coupling of the inductor structure to surrounding circuitry (e.g., a power stage or a controller of a power converter) of a device including the inductor structure.

The overlapped windings of the structure may help reduce the winding length and the DC resistance (DCR), which is beneficial to help reduce or minimize the winding loss of the inverse-coupled inductor structure. Furthermore, the overlapped winding structure may allow the inverse-coupled inductor structure to have a smaller or lower height compared to other inductor structures, which may reduce the profile of an entire power module in which the inverse-coupled inductor structure is included. A lower profile of the power module may also help reduce the overall size of an electronic device in which the inductor is included. Finally, at least a portion of the windings, which may be formed from copper or a material with similar properties (e.g., electrical conductivity, ohmic resistance, or the like) as copper, may be shielded by the magnetic core of the inverse-coupled inductor. Shielding the windings with the magnetic core may have the benefit of reducing or lowering Electromagnetic Interference (EMI) caused by the windings or otherwise aiding in the overall noise reduction of the inductor structure.

### ASPECTS OF THE DISCLOSURE

Some non-limiting aspects of the disclosure are set out in the following numbered clauses:
1. A Trans-Inductor Voltage Regulator (TLVR) circuit, comprising:
   a first magnetic core piece;
   a first winding portion located on at least a portion of the first magnetic core piece;
   an insulator on at least a portion of the first winding portion;
   a second winding portion located at least in part on the insulator and overlapping at least an underlying portion of the first winding portion, wherein the first winding portion and the second winding portion form a winding structure having a first end and a second end opposite the first end;
   a third winding portion proximate the first end of the winding structure;
   a fourth winding portion proximate the second end of the winding structure; and
   a second magnetic core portion located above the winding structure, the third winding portion, and the fourth winding portion.
2. The TLVR circuit of clause 1, wherein a terminal of the third winding portion is connected to a terminal of the fourth winding portion to couple the third winding portion and the fourth winding portion to the winding structure.
3. The TLVR circuit of any preceding clause, wherein the first winding portion and the second winding portion are primary side winding portions, wherein the third winding portion and the fourth winding portion are secondary side winding portions, and wherein at least one of the third winding portion or the fourth winding portion has a one-to-one turns ratio with the first winding portion or the second winding portion.
4. The TLVR circuit of any preceding clause, further comprising:
   a compensation inductor connected to the third winding portion and the fourth winding portion.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIGS. 1A - 1F illustrate different parts or components of a coupled inductor structure during a fabrication or assembly process.
FIGS 2A-2G illustrate multiple views and structures of an assembled coupled inductor structure.
FIG. 3A illustrates an example of a trans-inductor voltage regulator (TLVR) coupled inductor 300 for use in a TLVR power converter.
FIGS. 3B and 3C show different views of an example TLVR coupled inductor structure.
FIG. 4 is an example flowchart of a method of fabricating a coupled inductor structure.

### DETAILED DESCRIPTION

Power converters in low-voltage high-current point-of-load (POL) applications should provide high efficiency and fast load transient response. A multi-phase switched mode buck converter is a useful topology in such power conversion applications. Where non-coupled discrete inductors are used in the multi-phase buck converter, the above two objectives of high efficiency and fast load transient response are in conflict. A larger inductance may be used in each phase of the converter to decrease the inductor current ripple in each phase, which also reduces conduction related losses and thereby improves efficiency. Using larger inductors, however, increases transient response time of the converter and thus results in more severe overshoot and undershoot of the output voltage when a fast load transient occurs.

Instead of non-coupled inductors, inverse coupled inductors may be used in power converters such as multi-phase buck converters to help improve performance. The present subject matter is directed to a low-profile dual-phase inverse coupled inductor structure having diagonally overlapped windings and gap controlled inverse coupling, such as can be useful to help achieve strong negative coupling and high saturation current for POL applications. The inverse coupled inductor structure may include two different types of gaps. "First" gaps can be used to reduce a positive coupling between windings of the structure. "Second" gaps can be used to provide a strong inverse coupling between the windings. The first gaps may increase the reluctance of a core of the inductor structure for magnetic flux within the core, such as can result in reducing or lowering positive coupling between the windings. The second gaps may be used to reduce the reluctance for magnetic flux within the core that provides negative coupling between the windings and/or to control an amount of saturation current of the coupled inductor structure.

For example, the first gaps may be air gaps on ends of the structure. These air gaps can be sized to achieve a strong inverse coupling and to allow the structure to provide a high saturation current. The second gaps may be gaps in a middle leg of the structure (on the sides of the structure). The second gaps can be sized to help provide inverse coupling and a high saturation current for the structure.

The structure may have a low-profile, planar geometry, and a flat top surface. Such a structure may be advantageous for pick-and-place machines during manufacture of power converters including the inverse coupled inductor structure. The inverse coupled inductor structure may also provide a high open-circuit inductance (steady-state inductance), a controllable and strong inverse coupling coefficient, high saturation current, switching nodes and output nodes on respective same sides of the structure, along with improved mechanical robustness, overlapped windings for low winding resistance, and low EMI noise through shielding of the windings by the magnetic cores of the inductor structure.

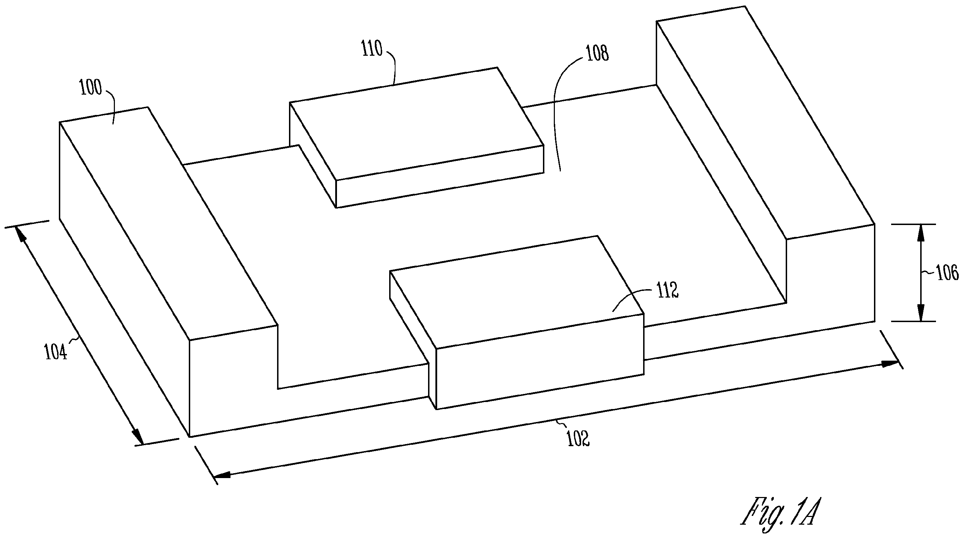

FIGS. 1A - 1F illustrate an example of different parts or components of a coupled inductor structure, such as during a fabrication or assembly process. FIG. 1A shows a first magnetic core piece 100. The first magnetic core piece 100 may include a "top" piece of a coupled inductor structure. The first magnetic core piece may be formed from a ferromagnetic material such as iron, ferrite, or any similar material. The first magnetic core piece 100 may be substantially rectangular in shape having a length 102, a width 104, and a height 106 that may form a rectangular block. The first magnetic core piece 100 may be etched or cut such as to form one or more slots, depressions, cavities, voids, receptacles, recesses, or the like in the otherwise rectangular block. The cavity may include a series of connecting cavities or as depicted in FIG. 1A, a single cavity 108 having an "H-shape" when looking at the cavity 108 from a side view from above, or an "I-shape" when looking at the cavity 108 from an end view from above. The cavity 108 may be formed such as that a first raised portion 110 and a second raised portion 112 may be located opposite each other in a middle portion (or substantially the middle) along the length 102 of the first magnetic core piece 100.

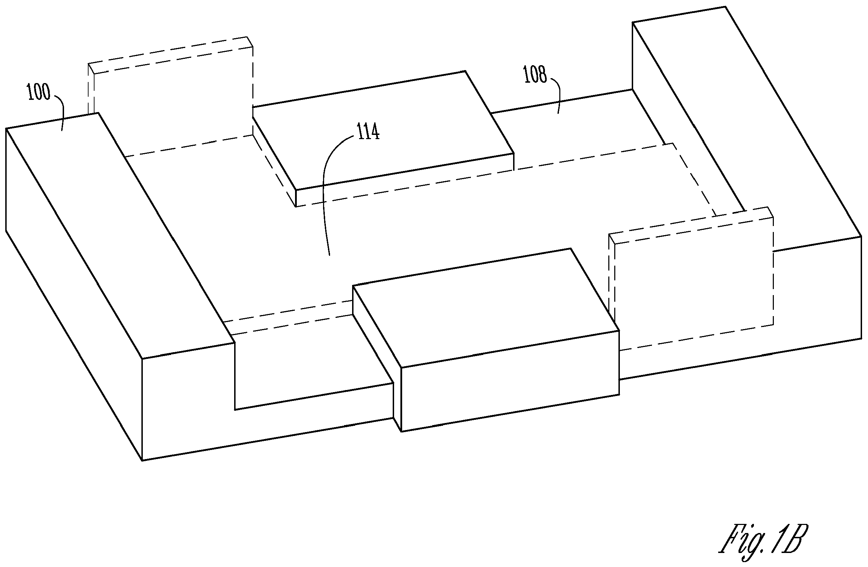

FIG. 1B shows an example of how a first conductive winding portion 114 may be located on or in a portion of the first magnetic core piece 100 such as in at least a portion of the cavity 108. The first conductive winding portion 114 may include a wire formed from an electrically conductive material, such as a metal such as copper or any suitable material with properties similar to copper. The first conductive winding portion 114 may include an insulated or coated wire, or portion of wire. The term winding as used herein may include, but is not limited to, a coil winding. The term winding may include a wire, or a flat or other electrical conductor such as a staple winding.

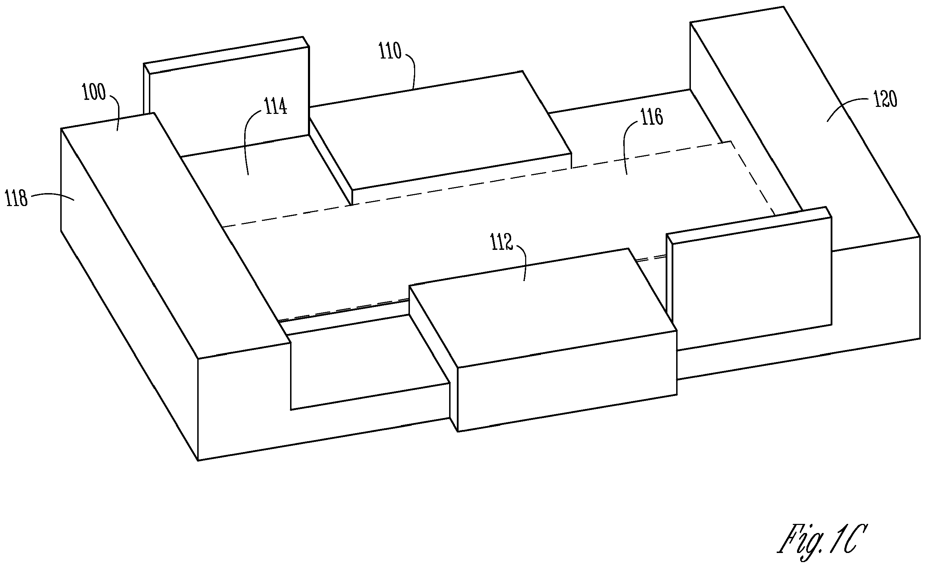

FIG. 1C shows an example in which an electrical insulator 116 may be located, positioned, laid on, or formed upon at least a portion of the first conductive winding portion 114. For example, a middle portion of the first conductive winding portion 114 spanning from one end (a first end 118) of the first magnetic core piece 100 to the other end (a second end 120) of the first magnetic core piece 100, and extending between the first raised portion 110 and the second raised portion 112. The electrical insulator 116 may be formed from a material such as polyimide tape (e.g., Kapton^{®} tape), rubber, plastic, or any other suitable or desired material capable of resisting electrical current and forming a barrier between electrically conductive structures. Alternatively, the electrical insulator 116 may be replaced by a coating on the first conductive winding portion 114 that can achieve the same or similar insulation effect as polyimide tape, rubber, plastic, or the like.

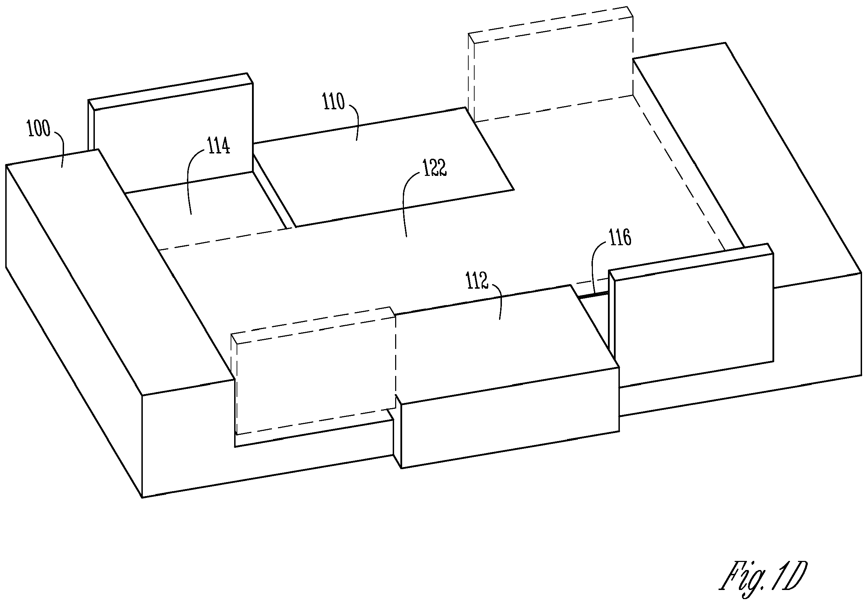

FIG. 1D shows an example in which a conductive second winding portion 122 may be located such as to cover at least a portion of the electrical insulator 116. Thus, the conductive second winding portion 122 can overlap and can be separated (by the electrical insulator 116) from at least an underlying portion of the first conductive winding portion 114. When the first conductive winding portion 114, the electrical insulator 116, and the conductive second winding portion 122 are all in place, they may at least partially fill the cavity 108 formed in the first magnetic core piece 100. Once the windings are in place, a glue, epoxy, or other sealing agent may be placed on at least a portion of the first raised portion 110 and/or the second raised portion 112.

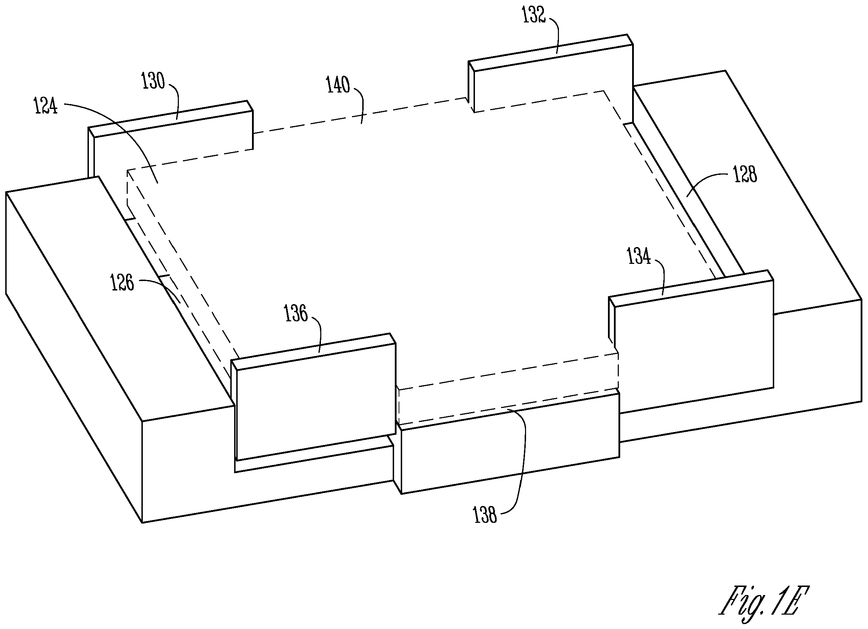

FIG. 1E shows an example in which a second magnetic core piece 124 may be placed on or over the conductive second winding portion 122 to form the assembled coupled inductor structure (hereinafter "the structure"). A portion of the first conductive winding portion 114 and the conductive second winding portion 122 (e.g., end portions) may form terminals on either side of the structure. For example, a portion of the first conductive winding portion 114 may form a first switch node terminal 130 and a portion of the conductive second winding portion 122 may form a second switch node terminal 132 on a same side of the structure. Similarly, a different portion of the first conductive winding portion 114 may form a first output voltage terminal 134 and a different portion of the conductive second winding portion 122 may form a second output voltage terminal 136 located on a second side of the structure. Thus, the first switch node terminal 130 may be substantially opposite or across from the second output voltage terminal 136 and the second switch node terminal 132 may be substantially opposite or across from the first output voltage terminal 134.

The structure may include a first gap 126 and a second gap 128 formed between the first magnetic core piece 100 and the second magnetic core piece 124. The first gap 126 and the second gap 128 may be substantially parallel to each other and may span a width of the structure between the first side and the second side. For example, the first gap 126 may span the width of the structure between the first switch node terminal 130 and the second output voltage terminal 136. Similarly, the second gap 128 may span the width of the structure between the second switch node terminal 132 and the first output voltage terminal 134.

The structure may further include a third gap 138 and a fourth gap 140 formed between the first magnetic core piece 100 and the second magnetic core piece 124. In an example, the third gap 138 may be located on one of the first side or the second side of the structure, and the fourth gap 140 may be located on the other of the first side or the second side, such that the third gap 138 and the fourth gap 140 are substantially parallel to each other. For example, the third gap 138 may be formed between the second raised portion 112 and the second magnetic core piece 124 on one side of the structure and the fourth gap 140 may be formed between the first raised portion 110 and the second magnetic core piece 124 on the other side of the structure.

The size, width, or thickness of the gaps may be used to control one or more properties of the coupled inductor. For example, increasing a thickness of the first gap 126 and/or the second gap 128 may help strengthen or increase the inverse coupling of the structure (e.g., by weakening the positive coupling) to a level that may provide both high open-circuit inductance, low short-circuit inductance, and high saturation current. Stated another way, the inverse coupling between the first winding portion and the second winding portion of the coupled inductor structure may be present with a strength based on the thickness of at least one of the first gap 126 or the second gap 128. Similarly, a thickness at least one of the third gap 138 or the fourth gap 140 may be determined, selected adjusted (e.g., increased, widened, decreased, or narrowed) such as to help increase or decrease the saturation current and/or negative coupling, as desired. Stated yet another way, a level of the saturation current of the structure may be based on a thickness of at least one of the third gap 138 or the fourth gap 140.

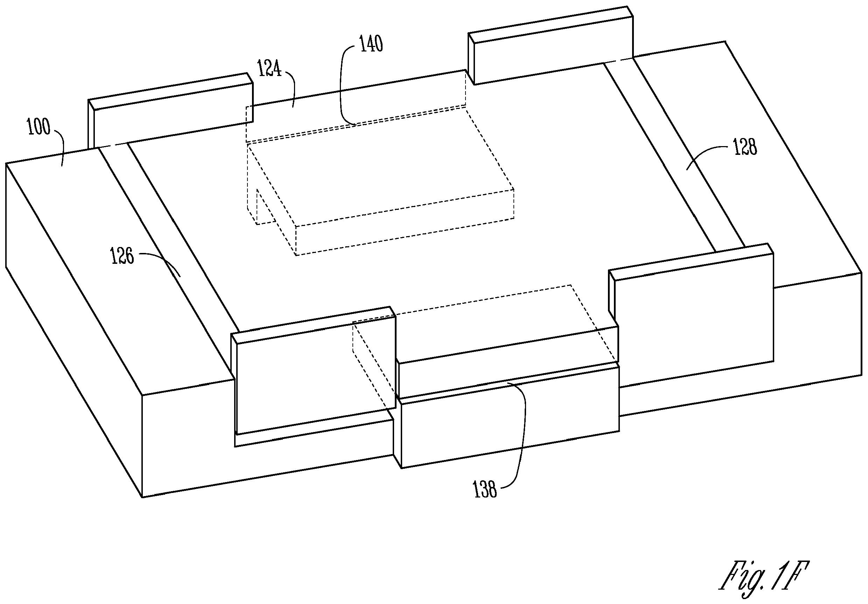

FIG. 1F shows an example in which the gaps may be filled with a material such as glue, epoxy, plastic, wood or the like, or may be left unfilled as an air gap. FIGS. 1A-1F show the structure being fabricated from the top piece (the first magnetic core piece 100) to the bottom piece (the second magnetic core piece 124), and that the assembled structure illustrated in FIGS. 1E and 1F is shown in a "flipped over" view such that the top of the structure is facing down, and the bottom of the structure is facing up. The structure may be fabricated from the bottom up (e.g., starting with the second magnetic core piece 124 and ending with the first magnetic core piece 100) or may be fabricated in any sequence that will result in the assembled structure described above.

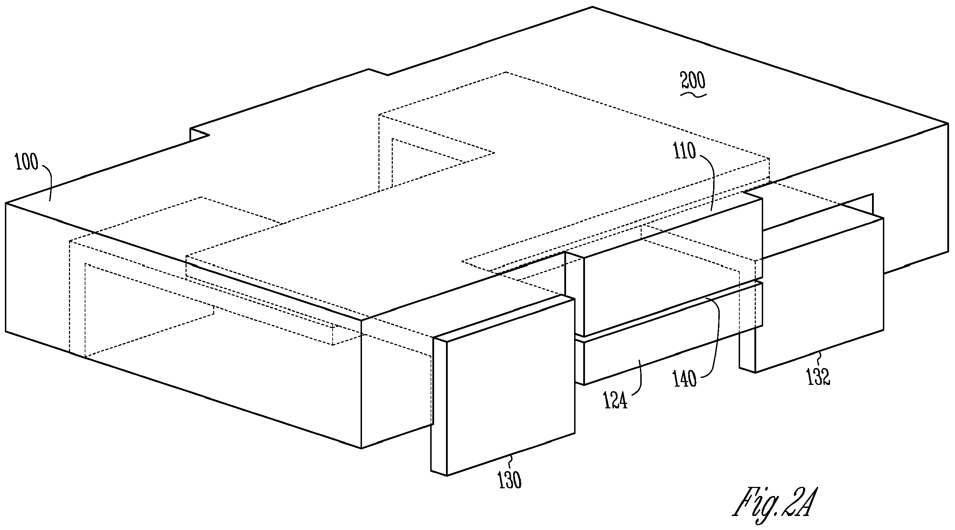

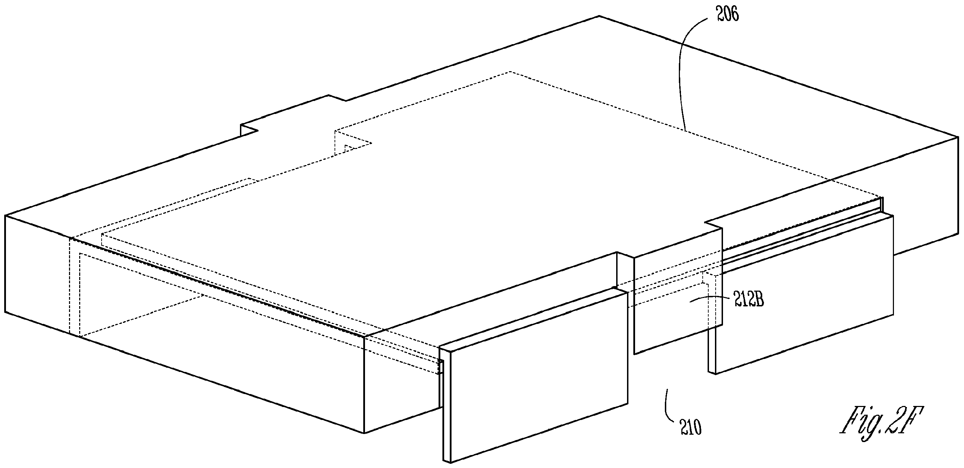

FIGS 2A-2G illustrate multiple views and structures of an assembled coupled inductor structure. FIG. 2A illustrates the structure assembled as described in FIGS. 1A-1F, turned over so that the top surface 200 is facing up and the terminals of the windings, such as the first switch node terminal 130 and the second switch node terminal 132 are at the bottom as they would be when attached to a circuit board. The surface area of the top surface 200 may be substantially or completely flat. Using a flat top surface 200 may allow for use of the coupled inductor in pick-and-place machines and may enhance the mechanical robustness of the structure. FIG. 2A shows a view in which the fourth gap 140 is on the facing side, on the same side with the first switch node terminal 130 and the second switch node terminal 132.

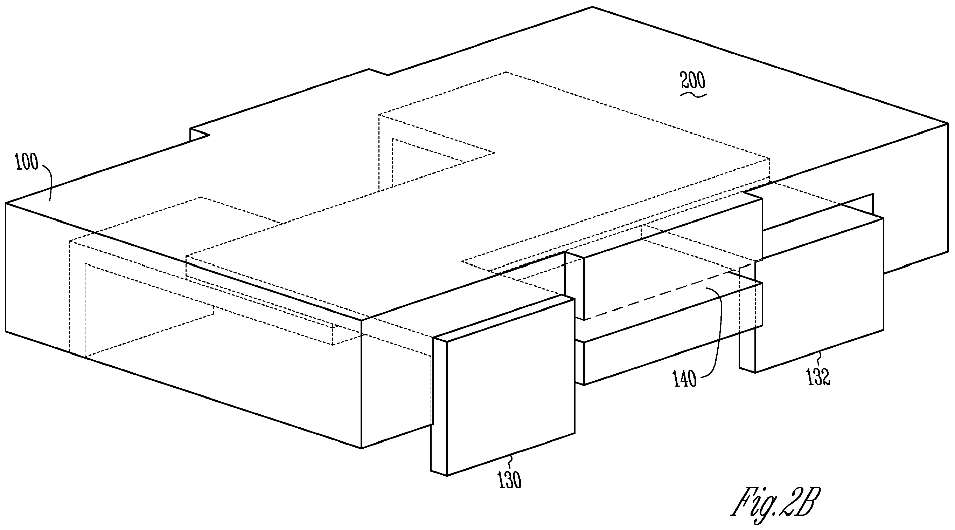

FIGS. 2B -2G show examples of how different aspects of the core structure and winding structure may be modified. For example, as discussed above, the size, width, or thickness of the gaps may be adjusted to control parameters such as the level of saturation current or the strength of the inverse coupling between the windings.

FIG. 2B illustrates a wider or thicker fourth gap 140 between the first raised portion 110 of the first magnetic core piece 100 and the second magnetic core piece 124.

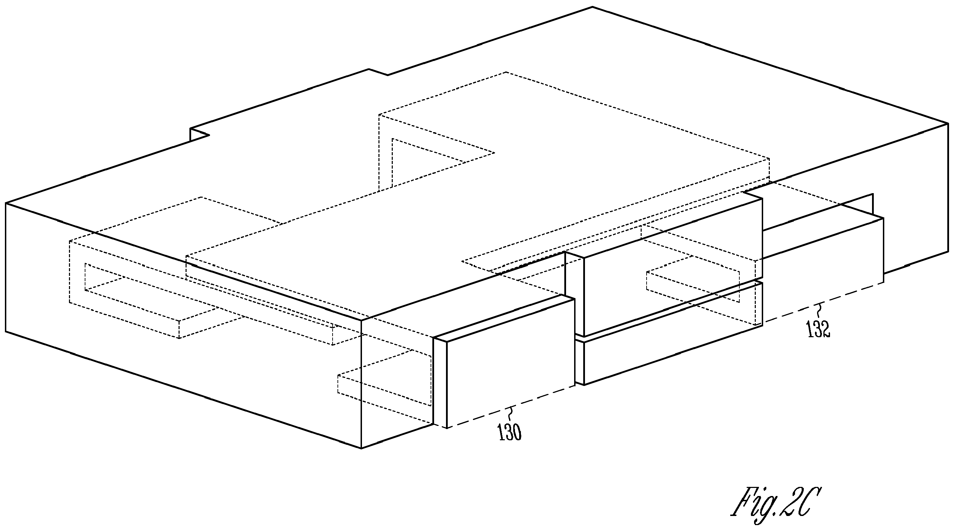

FIG. 2C shows an example of how a portion of one or more of the winding terminals, such as a portion of the first switch node terminal 130 or a portion of the second switch node terminal 132 may be bent (e.g., in a way so that a portion of the winding terminals are bent or twisted below or under the structure) such as to enable the structure to be assembled in a surface mount device.

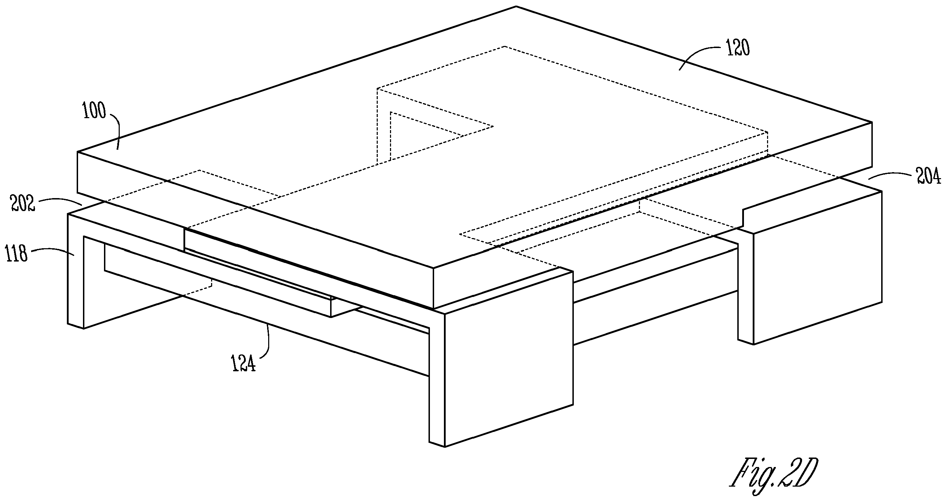

The structure may include additional gaps between the first magnetic core piece 100 and the second magnetic core piece 124. FIG. 2D shows an example in which a fifth gap 202 and a sixth gap 204 may be formed on the ends of the structure such as to be located substantially parallel to each other. The fifth gap 202 may be located on the first end 118 and sixth gap 204 may be located on the second end 120 (e.g., the opposite end) of the structure. The fifth gap 202 and the sixth gap 204 may replace the first gap 126 and the second gap 128 or may be formed in the structure in addition to the first gap 126 and the second gap 128. The structure may include as many gaps as necessary or desired to control, or adjust parameters such as the inductance, saturation current, or the like, as discussed above.

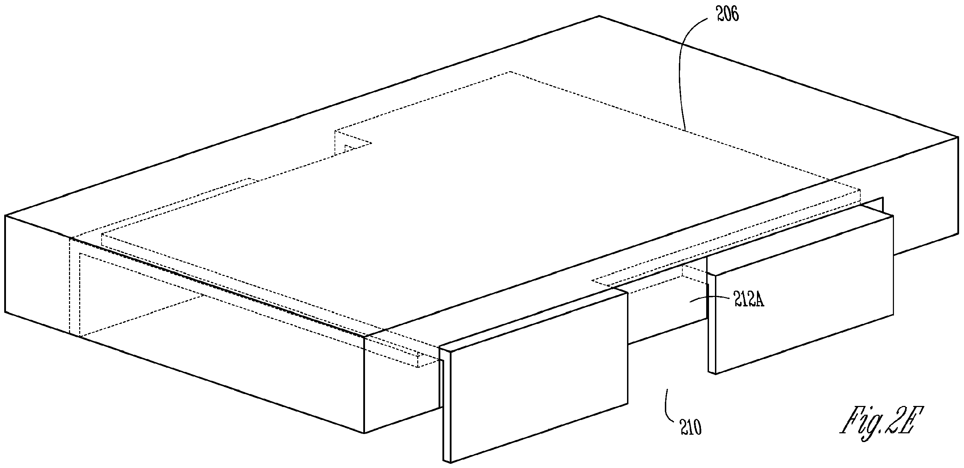

The windings may be sized differently based on a desired property, such as energy storage capacity. For example, as illustrated in FIGS. 1A-1E and FIGS. 2A-2C, the first conductive winding portion 114 and the conductive second winding portion 122 may be formed to essentially fit in the H-shaped (or I-shaped) cavity 108 formed in the first magnetic core piece 100. As illustrated in FIGS. 2E-2G, however, the windings may be formed such that when they are overlapped, they have a larger top surface area 208 that occupies or fills more space in an interior portion of the structure. This may, in turn, involve an alternate shaped cavity that can be formed in the first magnetic core piece 100. The size or shape of the cavity 108 and the size of the first conductive winding portion 114 and/or the conductive second winding portion 122 may be any size or shape suitable or desired. Similarly, the structure may include as many winding portions as desired or suitable for a particular device in which the structure is to be included.

An exterior portion of at least one of the first magnetic core piece 100 or the second magnetic core piece 124 may be formed or altered to meet a particular specification, fit in a particular device, or the like. The structure may include a "middle leg" 210 which may be an area, location, portion, or the like, of the structure formed by the core pieces between the winding terminals on the sides of the structure. For example, between the first switch node terminal 130 and the second switch node terminal 132 on one side of the structure and/or between the first output voltage terminal 134 and the second output voltage terminal 136 on the other side of the structure.

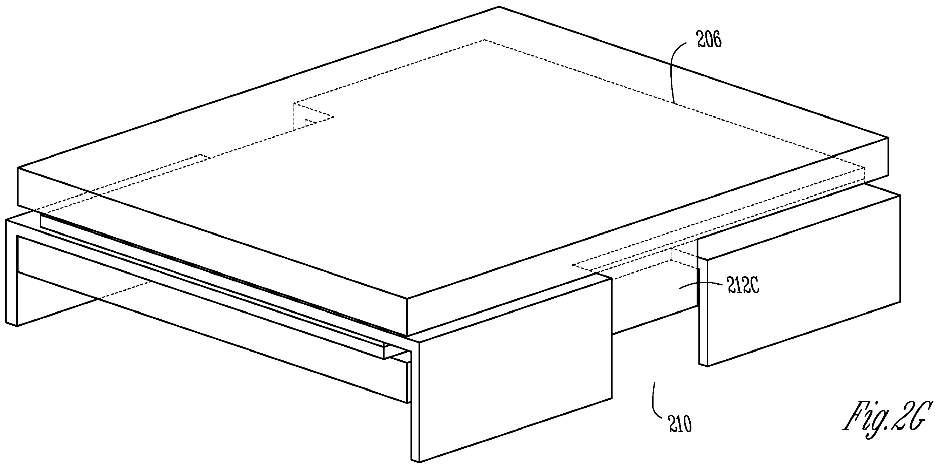

A portion of the magnetic core structure formed by the first magnetic core piece 100 and the second magnetic core piece 124 may be sized differently to form the middle leg 210. As illustrated in FIGS. 2E-2G, this middle leg portion 212A, 212B, 212C, may be recessed or otherwise located behind the winding terminals when viewed from a side angle (as illustrated in FIGS. 2E and 2G), may extend past the middle leg 210 (as illustrated in FIG. 2E) such as to "bump out" or extend beyond the winding terminals. The middle leg 210 may be formed so as to be substantially even with, flush with, or the like, the winding terminals. The middle leg portions may be mirrored on each side of the structure, such that the middle leg portions are symmetrical on each side of the structure, or the middle leg portions may be formed differently on opposite sides of the structure. For example, on one side of the structure (e.g., between the voltage output terminals) the middle leg portion may be recessed as illustrated by elements 212A and 212C, and on the other side (e.g., between the switch node terminals) may be bumped out beyond the winding terminals as illustrated by element 212B.

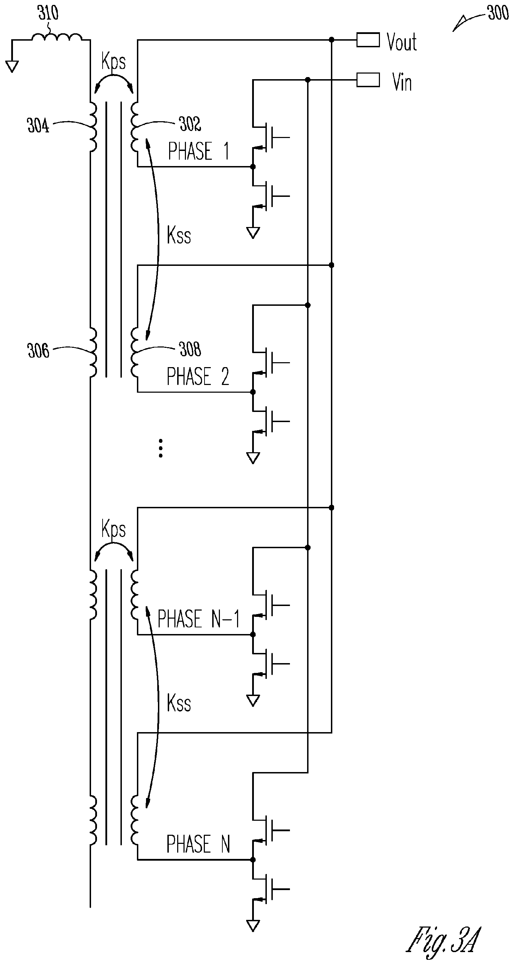

FIG. 3A illustrates an example of a trans-inductor voltage regulator (TLVR) coupled inductor 300 for use in a TLVR power converter. The TLVR coupled inductor 300 may include multiple phases connected to a primary winding of a transformer. The primary windings may in turn each be coupled to auxiliary secondary windings.

In the example illustrated in FIG. 3A, a first primary winding 302 and a second primary winding 308 may be coupled to a pair of secondary windings. For example, the first primary winding 302 may be coupled to a first secondary winding 304, and the second primary winding 308 may be coupled to a second secondary winding 306. The secondary windings 304 and 306 may be tightly coupled to the primary windings 302 and 308. Thus, the first secondary winding 304 may have a one-to-one turns ratio with the first primary winding 302. Similarly, the second secondary winding 306 may have a one-to-one turns ratio with the second primary winding 308. In an example, the first secondary winding 304 and the second secondary winding 306 may be connected to a compensation inductor 310, which may help improve the voltage profile, the power factor, or the transmission capacity of the power converter.

The TLVR coupled inductor 300 may include as many phases and sets of windings as desired, necessary, or appropriate for the device or component in which it is included. Furthermore, the primary windings may be coupled (as indicated by the arrows connecting the first primary winding 302 and the second primary winding 308, or non-coupled, as desired.

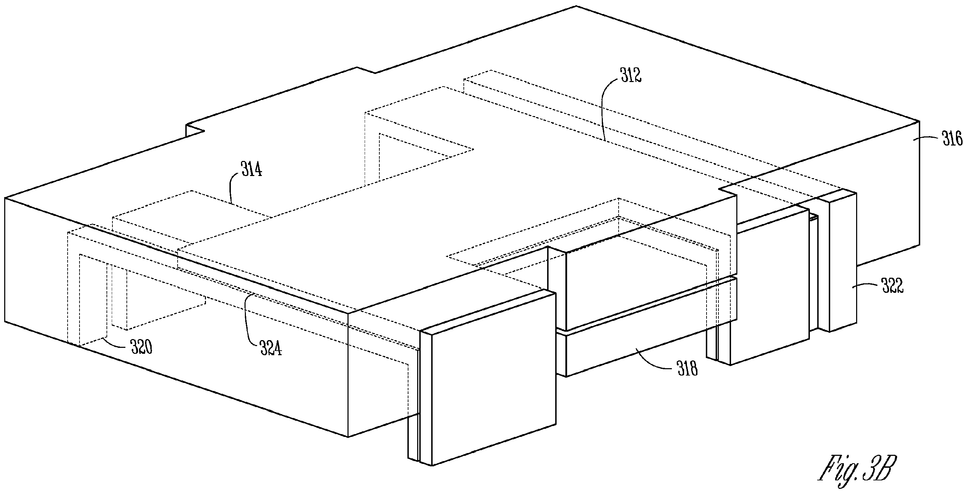

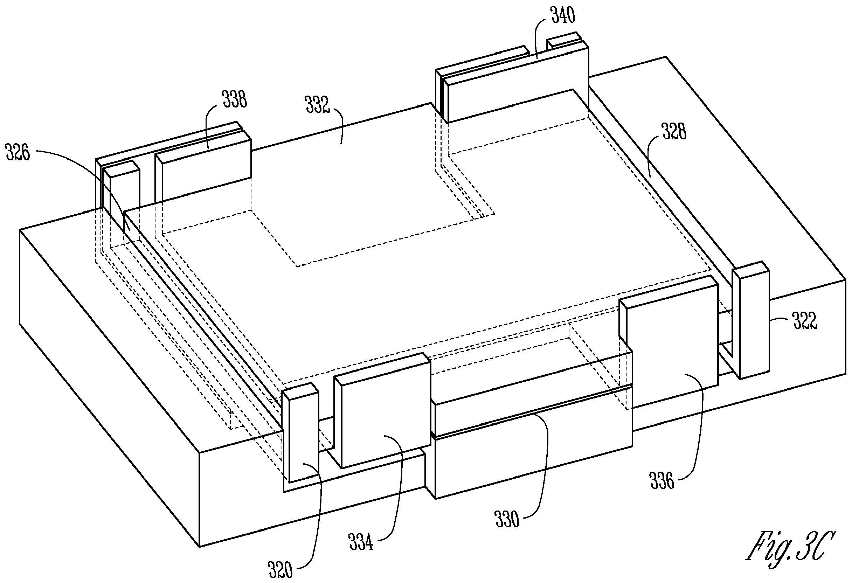

FIGS. 3B and 3C show different views of an example of a TLVR coupled inductor 300 structure (hereinafter the "TLVR structure"). FIG. 3B illustrates the TLVR structure looking at the top of the structure from above. FIG. 3C illustrates the TLVR structure looking at the bottom of the structure from above. The TLVR structures illustrated in FIGS. 3B and 3C may be formed in substantially the same manner described above in FIGS 1A-1F and include any of the variations described in FIGS. 2A- 2G. Therefore, the TLVR structure may include a first winding portion 312 and a second winding portion 314 overlapping at least an underlying portion of an insulator 324 and the first winding portion 312. The first winding portion 312, the second winding portion 314, and the insulator 324 may be located within a magnetic core formed by a first magnetic core piece 316 and a second magnetic core piece 318. The TLVR structure may further include a third winding portion 320 and a fourth winding portion 322. The third winding portion 320 may be located proximate a first end of the TLVR structure and the fourth winding portion 322 may be located proximate a second end of the TLVR structure, opposite the first end. In an example, the third winding portion 320 may be located next to, adjacent, proximate to, etc., the second winding portion 314 such that at least part of the third winding portion 320 is substantially parallel to at least part of the second winding portion 314. Similarly, the fourth winding portion 322 may be located next to, adjacent, proximate to, etc., the first winding portion 312 such that at least part of the fourth winding portion 322 is substantially parallel to at least part of the first winding portion 312. Furthermore, at least one of the third winding portion 320 or the fourth winding portion 322 may have a one-to-one turns ratio with the first winding portion 312 or the second winding portion 314.

FIG. 3C shows an example in which the TLVR structure may contain one or more gaps such as between the first magnetic core piece 316 and the second magnetic core piece 318. The gaps may be located similar to those discussed above. For example, a first gap 326 may be located on one end of the TLVR structure, and a second gap 328 may be located on the other end (e.g., an opposite end) of the TLVR structure, so that the first gap 326 and the second gap 328 are substantially parallel to each other. Similarly, a third gap 330 and a fourth gap 332, may be formed on opposite sides of the TLVR structure between the first magnetic core piece 316 and the second magnetic core piece 318 such that the third gap 330 and the fourth gap 332 are substantially parallel to each other. Like the gaps discussed above, one or more of the gaps may be filled with glue, epoxy, air, or any material suitable or desired. Also, the size (e.g., the width or thickness) of any of the gaps may be selected or adjusted to control the inverse or negative coupling of the TLVR structure, the saturation current of the TLVR structure, or the like.

Terminals of the windings of the TLVR structure may be located such as to extend from the sides of the TLVR structure. For example, terminal ends of the first winding portion 312, the second winding portion 314, the third winding portion 320, and the fourth winding portion 322 may be located on the sides of the TLVR structure such that two or more switch node terminals (e.g., first switch node terminal 334 and second switch node terminal 336) may be located on one side of the TLVR structure, and two or more output voltage terminals (e.g., first output voltage terminal 338 and second output voltage terminal 340) may be located on the other side of the TLVR structure opposite the switch node terminals. Any of the winding terminals may be bent (as discussed above) such as to enable the TLVR structure to be assembled in a surface mount device

A terminal of the third winding portion 320 may be connected to a terminal of the fourth winding portion 322, such as by an electrical connection on a printed circuit board (PCB) to couple the third winding portion 320 and the fourth winding portion 322 to another portion of the TLVR winding structure, such as to the first winding portion 312 and/or the second winding portion 314. Also, one or more terminals of the third winding portion 320 or the fourth winding portion 322 may be formed such as to overlap with one or more of the switch node terminals or the voltage output terminals.

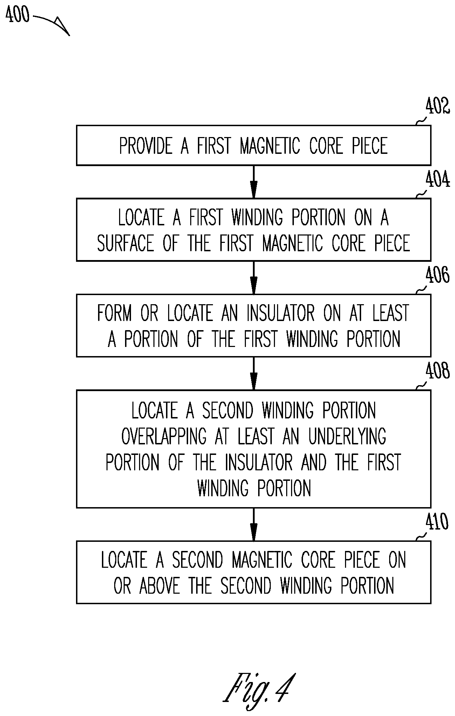

FIG. 4 is an example of a flowchart illustrating portions of a method 400 of fabricating a coupled inductor structure. The method 400 may include a series of operations or steps that may be utilized to perform the method 400. At 402, a first magnetic core piece may be provided. The first magnetic core piece may be formed from a ferromagnetic material such as iron, ferrite, or any similar material. In an example, a cavity or depression (or a series of cavities or depressions) may be formed in the first magnetic core piece either before or during the fabrication of the coupled inductor structure. At 404, a first winding portion may be located in or on a surface of the first magnetic core piece. In an example, at least a part of the first winding portion may be located in the cavity or depression formed in the first magnetic core piece.

At 406, an insulator may be formed or located on at least a portion of the first winding portion. The insulator may be a coating applied to the first winding portion or may be an electrically insulating material such as rubber, plastic, or any other desired or suitable electrically insulating material. At 408, a second winding portion may be located in or on the first magnetic core piece (such as in a portion of the cavity) overlapping at least an underlying portion of the insulator and the first winding portion. At 410, a second magnetic core piece may be located on the second winding portion. The second magnetic core piece may be placed above, on top of, or over the second winding portion and may be glued or otherwise attached to a portion of the first magnetic core piece.

The second magnetic core piece may be sized such that one or more gaps are formed between the first magnetic core piece and the second magnetic core piece. For example, a first gap and a second gap may be formed between the core pieces such that the first gap is located on a first end of the coupled inductor structure and the second gap is located on a second end of the coupled inductor structure opposite the first end. Alternatively, the first gap and the second gap may be located such as to span a width of the coupled inductor structure between the sides of the structure between terminals of the first winding portion and the second winding portion. The first gap and the second gap may be located so that they are substantially parallel to each other.

Additionally, or alternatively, a third gap and a fourth gap may be formed between the first magnetic core piece and the second magnetic core piece on the sides of the coupled inductor structure. For example, the third gap may be located on a first side of the structure and the fourth gap may be located on a second side of the structure opposite the first side. The third gap and the fourth gap may be located such as to be parallel to each other, and perpendicular to at least one of the first gap or the second gap.

Any of the first gap or the second gap may be filled with air, or a material such as glue, epoxy, paper, plastic or any material with a similar permeability to air. Furthermore, an inverse or negative coupling between the first winding portion and the second winding portion may be present with a strength based on a size (e.g., a width or thickness) of at least one of the first gap or the second gap. Additionally, or alternatively, a level of saturation current of the coupled inductor structure may be based on a size of at least one of the third gap or the fourth gap. The size of the gaps may be based at least in part, on one or more dimensions of at least one of the first magnetic core piece or the second magnetic core piece. When relatively large inductance, and thus extremely small gaps, is required for the coupled inductor design, low-permeability magnetic material(s) may be better candidates to fill the gaps, which may increase the gap length and make the gap reluctance and thus the inductance less sensitive to manufacturing tolerances.

At least one of the first winding portion or the second winding portion (or a part of each of the winding portions) may be electromagnetically shielded by the core pieces to reduce electromagnetic interference or noise. Additionally, or alternatively, an outer surface of at least one of the first magnetic core piece or the second magnetic core piece (e.g., a top surface or a bottom surface of the fully assembled structure) may be flat to allow the structure to maintain a small profile or height (e.g., 3.5 mm), length (e.g., 21.65 mm) and with (e.g., 14.5 mm) when compared to the dimensions of larger inductor structures while maintaining a higher inverse coupling and higher saturation current than other inductor structures.

### ADDITIONAL NOTES AND EXAMPLES

Example 1 is a device including an inversely coupled inductor structure, the device comprising: a first magnetic core piece; a conductive first winding portion on at least a portion of the first magnetic core piece; an electrical insulator on at least a portion of the first winding portion; a conductive second winding portion covering the insulator, wherein at least a portion of the second winding portion overlaps, and is separated by the insulator from, at least an underlying portion of the first winding portion; and a second magnetic core piece, on the second winding portion.
In Example 2, the subject matter of Example 1 optionally includes wherein a first input node and a second input node are located on a first side of the inversely coupled inductor structure, wherein the first input node is a a first switch node terminal and the second input node is a second switch node terminal.
In Example 3, the subject matter of Example 2 optionally includes wherein a first output voltage terminal and a second output voltage terminal are located on a second side of the inversely coupled inductor structure, and wherein the second side is opposite the first side.
In Example 4, the subject matter of Example 3 optionally includes wherein the first switch node terminal is located substantially across the inversely coupled inductor structure from the second output voltage terminal, and wherein the second switch node terminal is located substantially across the coupled inductor structure from the first output voltage terminal.
In Example 5, the subject matter of Example 4 optionally includes a first gap and a second gap formed between the first magnetic core piece and the second magnetic core piece, wherein the first gap and the second gap are substantially parallel to each other.
In Example 6, the subject matter of Example 5 optionally includes wherein the first gap spans a width of the inversely coupled inductor structure between the first side and the second side of the inversely coupled inductor structure between the first switch node terminal and the second output voltage terminal, and wherein the second gap spans a width of the inversely coupled inductor structure between the second switch node terminal and the first output voltage terminal.
In Example 7, the subject matter of any one or more of Examples 5-6 optionally include wherein an inverse coupling between the first winding portion and the second winding portion of the inversely coupled inductor structure is present with a strength based on a thickness of at least one of the first gap or the second gap.
In Example 8, the subject matter of any one or more of Examples 5-7 optionally include a third gap and a fourth gap formed between the first magnetic core piece and the second magnetic core piece, wherein the third gap is located on one of the first side or the second side, and the fourth gap is located on the other of the first side or the second side, and wherein the third gap and the fourth gap are substantially parallel to each other.
In Example 9, the subject matter of Example 8 optionally includes wherein a level of saturation current of the inversely coupled inductor structure is based on a thickness of at least one of the third gap or the fourth gap.
In Example 10, the subject matter of any one or more of Examples 8-9 optionally include wherein the first core piece is affixed to the second core piece.
In Example 11, the subject matter of any one or more of Examples 4-10 optionally include wherein at least one of the first switch node terminal, the second switch node terminal, the first output voltage terminal, or the second output voltage terminal is bent to enable to the inversely coupled inductor structure to be assembled in a surface mount device.
In Example 12, the subject matter of any one or more of Examples 1-11 optionally include wherein an outer surface of at least one of the first magnetic core piece or the second magnetic core piece is flat.
Example 13 is a method of fabricating an inversely coupled inductor structure, the method comprising: providing a first magnetic core piece; locating a first winding portion in or on the first magnetic core piece; forming an insulator on at least a portion of the first winding portion; locating a second winding portion in or on the first magnetic core piece overlapping at least an underlying portion of the insulator and the first winding portion; and locating a second magnetic core piece on the second winding.
In Example 14, the subject matter of Example 13 optionally includes forming a first gap and a second gap between the first magnetic core piece and the second magnetic core piece, wherein the first gap and the second gap are substantially parallel to each other, to establish an inverse coupling of the inversely coupled inductor structure having a strength that is based on a thickness of at least one of the first gap or the second gap.
In Example 15, the subject matter of any one or more of Examples 13-14 optionally include forming a first gap and a second gap between the first magnetic core piece and the second magnetic core piece, wherein the first gap is located on a first end of the inversely coupled inductor structure and wherein the second gap is located on a second end of the inversely coupled inductor structure opposite the first end such that the first gap and the second gap are parallel to each other.
In Example 16, the subject matter of any one or more of Examples 13-15 optionally include forming a third gap and a fourth gap between the first magnetic core piece and the second magnetic core piece, wherein the third gap is located on a first side of the inversely coupled inductor structure and the fourth gap is located on a second side of the inversely coupled inductor structure opposite the first side such that the third gap and the fourth gap are parallel to each other.
Example 17 is a Trans-Inductor Voltage Regulator (TLVR) circuit, comprising: a first magnetic core piece; a first winding portion located on at least a portion of the first magnetic core piece; an insulator on at least a portion of the first winding portion; a second winding portion located at least in part on the insulator and overlapping at least an underlying portion of the first winding portion, wherein the first winding portion and the second winding portion form a winding structure having a first end and a second end opposite the first end; a third winding portion proximate the first end of the winding structure; a fourth winding portion proximate the second end of the winding structure; and a second magnetic core portion located above the winding structure, the third winding portion, and the fourth winding portion.
In Example 18, the subject matter of Example 17 optionally includes wherein a terminal of the third winding portion is connected to a terminal of the fourth winding portion to couple the third winding portion and the fourth winding portion to the winding structure.
In Example 19, the subject matter of any one or more of Examples 17-18 optionally include wherein the first winding portion and the second winding portion are primary side winding portions, wherein the third winding portion and the fourth winding portion are secondary side winding portions, and wherein at least one of the third winding portion or the fourth winding portion has a one-to-one turns ratio with the first winding portion or the second winding portion.
In Example 20, the subject matter of any one or more of Examples 17-19 optionally include a compensation inductor connected to the third winding portion and the fourth winding portion.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims, along with the full scope of equivalents to which such claims are entitled.

## Claims

1. A device including an inversely coupled inductor structure, the device comprising:
a first magnetic core piece;
a conductive first winding portion on at least a portion of the first magnetic core piece;
an electrical insulator on at least a portion of the first winding portion;
a conductive second winding portion covering the insulator, wherein at least a portion of the second winding portion overlaps, and is separated by the insulator from, at least an underlying portion of the first winding portion; and
a second magnetic core piece, on the second winding portion.

2. The device of claim 1, wherein a first input node and a second input node are located on a first side of the inversely coupled inductor structure, wherein the first input node is a first switch node terminal and the second input node is a second switch node terminal.

3. The device of claim 2, wherein a first output voltage terminal and a second output voltage terminal are located on a second side of the inversely coupled inductor structure, and wherein the second side is opposite the first side.

4. The device of claim 3, wherein the first switch node terminal is located substantially across the inversely coupled inductor structure from the second output voltage terminal, and wherein the second switch node terminal is located substantially across the coupled inductor structure from the first output voltage terminal.

5. The device of claim 4, further comprising:
a first gap and a second gap formed between the first magnetic core piece and the second magnetic core piece, wherein the first gap and the second gap are substantially parallel to each other.

6. The device of claim 5, wherein the first gap spans a width of the inversely coupled inductor structure between the first side and the second side of the inversely coupled inductor structure between the first switch node terminal and the second output voltage terminal, and wherein the second gap spans a width of the inversely coupled inductor structure between the second switch node terminal and the first output voltage terminal.

7. The device of claim 5 or claim 6, wherein an inverse coupling between the first winding portion and the second winding portion of the inversely coupled inductor structure is present with a strength based on a thickness of at least one of the first gap or the second gap.

8. The device of any of claims 5 to 7, further comprising:
a third gap and a fourth gap formed between the first magnetic core piece and the second magnetic core piece, wherein the third gap is located on one of the first side or the second side, and the fourth gap is located on the other of the first side or the second side, and wherein the third gap and the fourth gap are substantially parallel to each other.

9. The device of claim 8, wherein a level of saturation current of the inversely coupled inductor structure is based on a thickness of at least one of the third gap or the fourth gap.

10. The device of claim 8 or claim 9, wherein the first core piece is affixed to the second core piece.

11. The device of any of claims 4 to 10, wherein at least one of the first switch node terminal, the second switch node terminal, the first output voltage terminal, or the second output voltage terminal is bent to enable to the inversely coupled inductor structure to be assembled in a surface mount device.

12. The device of any preceding claim, wherein an outer surface of at least one of the first magnetic core piece or the second magnetic core piece is flat.

13. A method of fabricating an inversely coupled inductor structure, the method comprising:
providing a first magnetic core piece;
locating a first winding portion in or on the first magnetic core piece;
forming an insulator on at least a portion of the first winding portion;
locating a second winding portion in or on the first magnetic core piece overlapping at least an underlying portion of the insulator and the first winding portion; and
locating a second magnetic core piece on the second winding.

14. The method of claims 13, further comprising:
forming a first gap and a second gap between the first magnetic core piece and the second magnetic core piece, wherein the first gap and the second gap are substantially parallel to each other, to establish an inverse coupling of the inversely coupled inductor structure having a strength that is based on a thickness of at least one of the first gap or the second gap.

15. The method of claim 13 or claim 14, further comprising one or more of:
(a) forming a first gap and a second gap between the first magnetic core piece and the second magnetic core piece, wherein the first gap is located on a first end of the inversely coupled inductor structure and wherein the second gap is located on a second end of the inversely coupled inductor structure opposite the first end such that the first gap and the second gap are parallel to each other;
(b) forming a third gap and a fourth gap between the first magnetic core piece and the second magnetic core piece, wherein the third gap is located on a first side of the inversely coupled inductor structure and the fourth gap is located on a second side of the inversely coupled inductor structure opposite the first side such that the third gap and the fourth gap are parallel to each other.
